# EUROPEAN PATENT SPECIFICATION

(11) **EP 1 754 907 B1**
(45) Date of publication and mention of the grant of the patent: **03.11.2010**
(21) Application number: 06013472.3
(22) Date of filing: 29.06.2006
(51) Int. Cl.: F16D 27/11, F16D 27/00

(54) **Electromagnetic actuator, clutch device using it, and power transmission device for automobile**
Elektromagnetischer Aktuator, Kupplungseinrichtung und Getriebe für ein Fahrzeug
Actionneur electromagnetique, embrayage avec cet actionneur et dispositif de transmission de puissance pour véhicule automobile

(30) Priority: 30.06.2005 JP 2005190878
(43) Date of publication of application: 21.02.2007
(73) Proprietor: HITACHI, LTD., Chiyoda-ku Tokyo 100-8280 (JP)
(72) Inventor: Yamasaki, Masaru c/o Hitachi Ltd, I.P. Group, 1-chome, Chiyoda-ku, Tokyo 100-8220 (JP); Kuroiwa, Hiroshi c/o Hitachi. Ltd. I.P. Group, 1-chome, Chiyoda-ku, Tokyo 100-8220 (JP); Morita, Minoru c/o Hitachi Ltd. I.P. Group, 1-chome, Chiyoda-ku, Tokyo 100-8220 (JP)
(74) Representative: MERH-IP Matias Erny Reichl Hoffmann

(56) References cited:
- DE-A1- 10 013 516
- DE-A1- 10 324 487

## Description

### BACKGROUND OF THE INVENTION

### Field of the Invention

The present invention relates to an electromagnetic actuator for an automobile, and in particular, to an electromagnetic actuator used for a clutch device arranged in a power train.

### Description of related art

In an electromagnetic actuator for a clutch, a yoke and an armature which are formed of ferromagnetic substances are arranged in a magnetic field which is generated by energizing a magnet coil, and a force at the time of the yoke and armature which attract each other is taken out, and it is made a control force of the clutch. Here, a request of reducing energy consumption of a magnet coil has created devices which each make a permanent magnet arranged in a magnetic circuit, and use magnetic flux which the permanent magnet generates. For example, JP-A-2000-192996 discloses a devised clutch having a construction of energizing a magnet coil only at the time of switching a state (engagement and disengagement) of the clutch by installing a permanent magnet in a yoke, providing a control force, required for maintenance of a clutch engaging state, by the permanent magnet, and devising strength of an attractive force by the permanent magnet and a spring force of a return spring.

Although being suitable for a clutch which performs ON-OFF operation of (engagement and disengagement) since the attractive force by the permanent magnet can perform only control of "ON" or "OFF", the above-mentioned clutch is not suitable for a clutch used with adjusting transmitting torque continuously from the disengagement to the engagement.

DE 100 13 516 A1, which is considered as the closest prior art, shows a braking or coupling device which has a rotating frictional body that can be pressed against a stop. Plate-shaped magnetically conducting parts are mounted on the stop and frictional body or the stop or body consists at least partly of a magnetically conducting material. At least one magnet is mounted above the stop and body so magnetic flux is formed perpendicular to the movement direction so the body and stop butt together perpendicularly to the flux.

### Summary of the Invention

It is an object of the present invention to provide an electromagnetic actuator, which can generate a continuous control force using a permanent magnet, and can adjust transmitting torque continuously from disengagement to engagement, so as to be applicable to a clutch arranged in a power train of an automobile which is required for transmitting torque to be adjusted from disengagement to engagement continuously, and a clutch using it.

The object is solved according to the independent claims. Dependent claims describe preferred embodiments of the present invention.

In order to achieve the above-described object, the present invention may be equipped with a magnet coil, a yoke which transmits magnetic flux generated by energizing the magnet coil, an armature which is installed with keeping a predetermined gap with the yoke, transmits the magnetic flux which is emitted from the yoke, and is attracted toward through the yoke, a permanent magnet, and/or a switching electromagnet coil which controls the magnetic flux of the permanent magnet.

Furthermore, it is also sufficient to be equipped with a short-circuit magnetic circuit which returns the magnetic flux, which the permanent magnet generates, to the permanent magnet without passing the armature.

According to the present invention, since the electromagnetic actuator used for a power train of an automobile can maintain a control force by an attractive force mainly caused by the embedded permanent magnet also in a situation that it is necessary to always generate the control force. Hence, it becomes possible to suppress electric power energizing the coil to be able to achieve an energy-saving device. In addition, it is possible to contribute to energy saving of the power train and automobile using this.
The above features can be combined in any way, partly or as a whole.

Other objects, features and advantages of the invention will become apparent from the following description of the embodiments of the invention taken in conjunction with the accompanying drawings.

### Brief Description of the Drawings

Fig. 1 is a cross-sectional view of one embodiment of an electromagnetic actuator according to to the present invention;
Fig. 2 is a view showing a direction of magnetic flux of the electromagnetic actuator according to the present invention at the time of non-energization;
Fig. 3 is a view showing directions of magnetic flux of the electromagnetic actuator according to the present invention when a switching electromagnetic coil is energized with a small current;
Fig. 4 is a view showing directions of magnetic flux of the electromagnetic actuator according to the present invention when the switching electromagnetic coil is energized with a large current;
Fig. 5 is a graph showing an example of relationship between an attractive force of the electromagnetic actuator and a current of the switching electromagnetic coil, according to the present invention;
Fig. 6 is a cross-sectional view of another embodiment of an electromagnetic actuator according to the present invention;
Fig. 7 is a cross-sectional view of an embodiment of a clutch device having an electromagnetic actuator according to the present invention;
Fig. 8 is a cross-sectional view of an embodiment of a transmission for an automobile having a clutch having an electromagnetic actuator according to the present invention; and
Fig. 9 is a block diagram showing one embodiment of a control device which controls energization of an electromagnetic coil 1 and a switching electromagnet coil 6.

### Detailed Description of the Invention

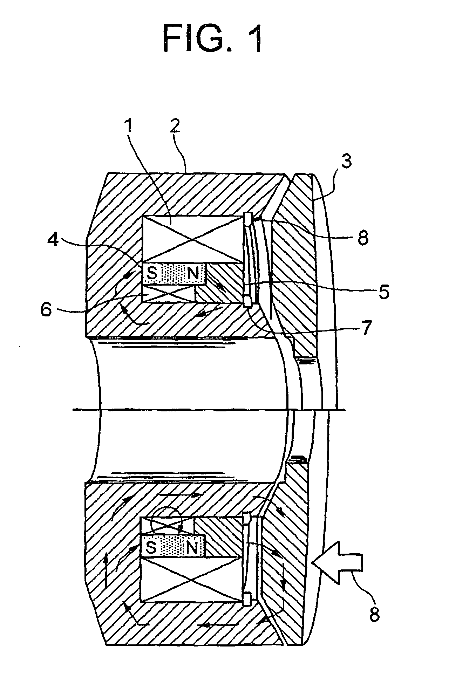

Hereafter, an embodiment of the present invention will be described with reference to Figs. 1 to 5.

### [Embodiment 1]

Fig. 1 is a cross-sectional view of one embodiment of an electromagnetic actuator according to the present invention. A yoke 2 is made of a ferromagnetic substance, and has a circular shape with a U-shaped cross-section. An armature 3 is installed with a predetermined gap so as to cover an opening portion of the yoke 2. In a U-shaped interior of the yoke 2, an electromagnetic coil 1 which is made of an annularly coiled copper wire and is molded with a resin is arranged.

Since a magnetic field is generated clockwise to a current around the electromagnetic coil 1 when the electromagnetic coil 1 is energized, magnetic flux by the electromagnetic coil 1 passes a portion, which is constructed of the yoke 2 and armature 3, so as to flow back. The armature 3 is supported by a guide which is not shown, and is movable in a direction of reducing the gap with the yoke 2 to be restrained in other directions. In addition, motion of the armature 3 is transferred to an operation target which is not shown.

When the electromagnetic coil 1 is energized for a magnetic field to be generated, since there is the gap, the armature 3 is attracted to the yoke 2. With the attractive force being transferred to the operation target, predetermined operation is performed.

Inside the yoke 2, a permanent magnet 4 which is circular and is magnetized in an axial direction is further arranged inside the electromagnetic coil 1, and is arranged so that an S pole of the permanent magnet 4 may contact to the yoke 2 and an N pole may contact to a short-circuit magnetic circuit 5 which is made of a ferromagnetic substance. The short-circuit magnetic circuit 5 is arranged so that another side which does not contact to the permanent magnet 4 may contact the yoke 2.

That is, the short-circuit magnetic circuit 5 is provided so as to short-circuit magnetically the N pole, which is one magnetic pole of the permanent magnet 4, and the yoke 2.

The switching electromagnet coil 6 is arranged in a region surrounded by the yoke 2, permanent magnet 4, and short-circuit magnetic circuit 5. The switching electromagnet coil 6 is also made of an annularly coiled copper wire and is molded with a resin. The permanent magnet 4, which is arranged in the yoke 2, the short-circuit magnetic circuit 5, electromagnetic coil 1, and switching electromagnet coil 6 are fixed with an inside C ring 7 and an outside C ring 8.

Here, electric power supply to the electromagnetic coil 1 and switching electromagnet coil 6 is performed by a controller which is not shown. In addition, it is assumed that the armature 3 is connected to the operation target and a force which the armature 3 receives is transmitted to the operation target.

In addition, although the short-circuit magnetic circuit 5 and the permanent magnet 4 which is annular and is magnetized in an axial direction are used in this embodiment, the short-circuit magnetic circuit 5 may be omitted as long as it is possible to exert a similar effect, or the permanent magnets 4 may be discal or rod-like. In addition, as long as it is possible to exert a similar effect, the arrangement of the permanent magnet 4, short-circuit magnetic circuit 5, electromagnetic coil 1, and switching electromagnet coil 6 may be another form.

Operation of a clutch with the above-mentioned construction will be explained below.

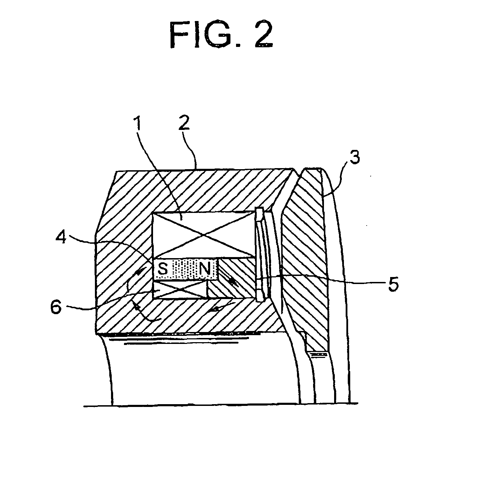

First, in the case that the electromagnetic coil 1 and switching electromagnet coil 6 are not energized, magnetic flux from the permanent magnet 4 follows a route of passing the yoke 2 through the short-circuit magnetic circuit 5, and returning to the permanent magnet 4, as shown in Fig. 2. That is, most magnetic flux passes along the route which is not concerned to the armature 3. For this reason, the attractive force of the armature 3 by the permanent magnet 4 is in a state that it is hardly generated.

Here, when a current is flowed through the electromagnetic coil 1, the magnetic field according to a current value is generated. Hence, since an attractive force is generated between the yoke 2 and armature 3, it is possible to give a force to the operation target. When the current flowed through the electromagnetic coil 1 is decreased, the attractive force is also decreased, and hence, it is possible to continuously control the attractive force by controlling the current.

On the other hand, a case that a current is flowed through the switching electromagnet coil 6 will be explained below.

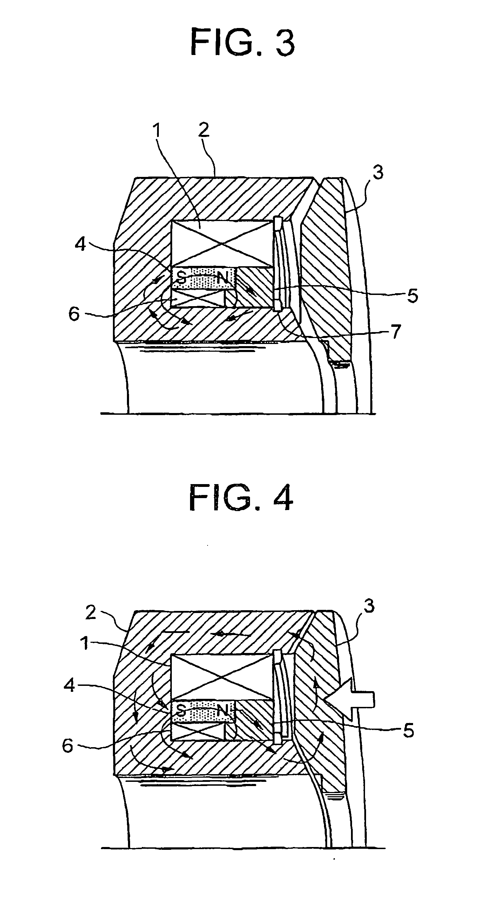

The switching electromagnet coil 6 applies a current in a direction of generating a magnetic field reverse to a direction of a magnetic field by the permanent magnet 4 at the time of no-energization as shown in Fig. 2. That is, as shown in Fig. 3, it is made that the magnetic field by the switching electromagnet coil 6 becomes counterclockwise against the clockwise magnetic field by the permanent magnet 4.

When the switching electromagnet coil 6 is energized, its magnetic field interferes with the magnetic field of the permanent magnet 4, and hence, an interference result changes according to a current value. As shown in Fig. 3, while a current is small, the magnetic fields of the permanent magnet 4 and switching electromagnet coil 6 operate so as to cancel each other, and differential magnetic flux after being cancelled generates a small force of attracting the armature 3.

As shown in Fig. 4, when the current becomes large, both the magnetic fields of the permanent magnet 4 and switching electromagnet coil 6 become counterclockwise to reinforce each other. For this reason, since the mutually reinforced magnetic flux can attract the armature 3, it becomes possible to generate a large force.

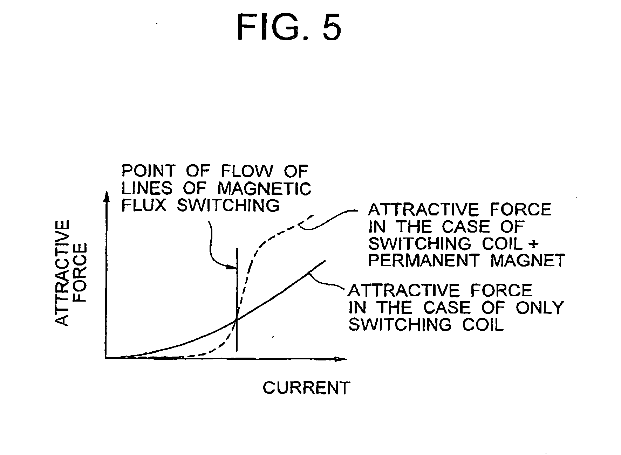

Fig. 5 shows a graph drawn by making the current value of the switching electromagnet coil 6 a horizontal axis, and making the attractive force of the armature 3 a vertical axis. The graph plots both results of presence and absence of the permanent magnet 4.

First, when the permanent magnet 4 is absent, it shows the tendency that the attractive force increases monotonously with increase of the current. On the other hand, when the permanent magnet 4 is present, a state that the permanent magnet 4 and switching electromagnet coil 6 cancel each other is switched to a state of reinforcing each other at a certain current value, and as shown in the graph, the graph shows the tendency that the attractive force jumps up on the way.

As apparent from the characteristics of the attractive force in Fig. 5, although the permanent magnet 4 is arranged in this embodiment, it is possible to make the armature 3 inoperative without generating the attractive force by the permanent magnet 4 in the state that the switching electromagnet coil 6 is not energized. Alternatively, since almost all magnetic flux from the permanent magnet 4 returns to the permanent magnet 4 by being short-circuited by the yoke 2 portion without passing the armature 3, even if a minute part of magnetic flux passes a magnetic path of returning to the permanent magnet 4 through the armature 3, it never occurs to generate such an attractive force that moves the armature 3.

In addition, in the state that the switching electromagnet coil 6 is energized, since the attractive force by the permanent magnet 4 is added to the attractive force by the switching electromagnet coil 6, it is possible to generate a larger attractive force in comparison with the case of only the switching electromagnet coil 6. That is, to the same attractive force, a current required for the switching electromagnet coil 6 can be smaller.

As a mode of operation of an electromagnetic actuator, when performing control to a state that a force is generated from a state that the force is not generated, first, the electromagnetic coil 1 is energized for a current to be adjusted, and a required force is generated. Next, when generating the force and holding it as it is, the switching electromagnet coil 6 is energized, and after a current which flows in the switching electromagnet coil 6 fully rises, energization of the electromagnetic coil 1 is stopped.

Since the switching electromagnet coil 6 attracts the armature using a magnetomotive force of the permanent magnet 4, it is possible to hold the force with a smaller current in comparison with the electromagnetic coil 1. Thus, it is possible to hold the force of the electromagnetic actuator with the small current flowed through the switching electromagnet coil 6. In addition, since quick response in the switching electromagnet coil 6 is unnecessary, it is also sufficient to increase a number of windings with using a thinner copper wire to further reduce the current consumed.

As described above, according to this embodiment, it is possible to reduce power consumption of the electromagnetic coil 1 at the time of holding an electromagnetic actuator in an operating state while securing a function of continuous generative force control of the electromagnetic actuator. Hence, it is possible to improve fuel consumption of an automobile using this for a power train.

### [Embodiment 2]

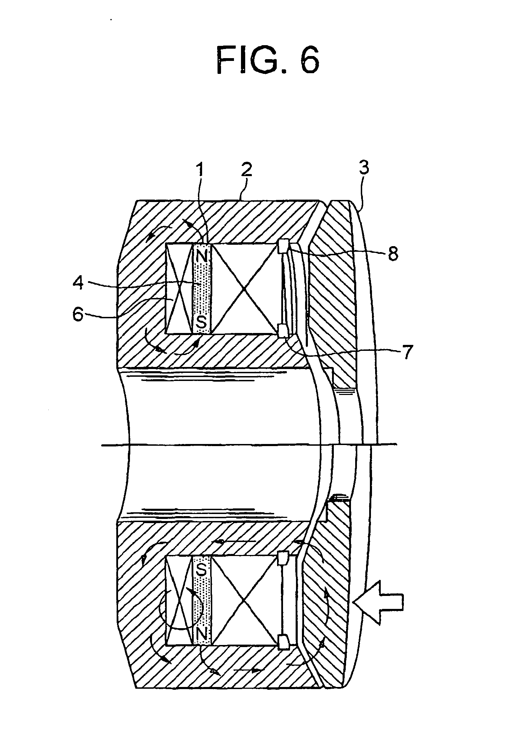

Another embodiment of the present invention will be described with reference to Fig. 6,

Fig. 6 is a cross-sectional view of another embodiment of an electromagnetic actuator according to the present invention. The construction of the yoke 2, electromagnetic coil 1, and armature 3 is the same as that in the first embodiment shown in Fig. 1. Differences in this embodiment shown in Fig. 6 are that the discal permanent magnet 4 which is magnetized radially is arranged so as to contact to inside and outside portions of the yoke 2, that the switching electromagnet coil 6 is arranged in a region surrounded by the yoke 2 and permanent magnet 4, and that there is no short-circuit magnetic circuit 5.

Operation of an electromagnetic actuator with the above-mentioned construction will be explained below.

Generation of an attractive force by the electromagnetic coil 1 is similar to the first embodiment, and hence, it is possible to continuously control the attractive force by controlling the current.

In addition, this is also the same as that of the first embodiment when a current is flowed through the switching electromagnet coil 6. Hence, it is possible to make the armature 3 inoperative because of not generating an attractive force by the permanent magnet 4 in the state that the switching electromagnet coil 6 is not energized. In addition, in the state that the switching electromagnet coil 6 is energized, since the attractive force by the permanent magnet 4 is added to the attractive force by the switching electromagnet coil 6, it is possible to generate a larger attractive force in comparison with the case of only the switching electromagnet coil 6. That is, to the same attractive force, a current required for the switching electromagnet coil 6 can be smaller.

As a mode of operation of an electromagnetic actuator, when performing control to a state that a force is generated from a state that the force is not generated, first, the electromagnetic coil 1 is energized for a current to be adjusted, and a required force is generated. Next, when generating the force and holding it as it is, the switching electromagnet coil 6 is energized, and after a current which flows in the switching electromagnet coil 6 fully rises, energization of the electromagnetic coil 1 is stopped. Since the switching electromagnet coil 6 attracts the armature 3 using a magnetomotive force of the permanent magnet 4, it is possible to hold the force with a smaller current in comparison with the electromagnetic coil 1. Thus, it is possible to hold the force of the electromagnetic actuator with the small current flowed through the switching electromagnet coil 6.

As described above, according to this embodiment, it is possible to reduce power consumption of the electromagnetic coil 1 at the time of holding an electromagnetic actuator in an operating state while securing a function of continuous generative force control of the electromagnetic actuator. Hence, it is possible to improve fuel consumption of an automobile using this for a power train.

### [Embodiment 3]

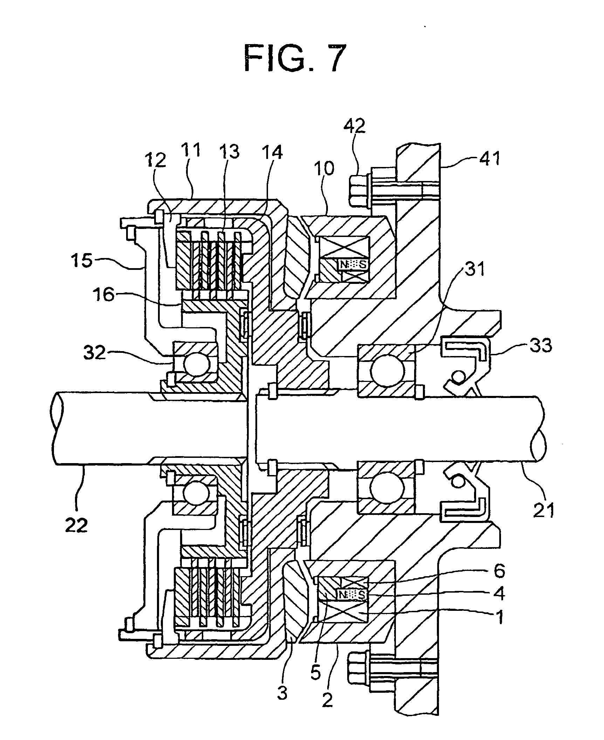

An embodiment of a clutch according to the present invention will be described with reference with Fig. 7.

Fig. 7 is a drawing showing a cross-section of an embodiment of a clutch device using the electromagnetic actuator 10 according to the present invention. The construction of the electromagnetic actuator 10 is the same as that in the first embodiment shown in Fig. 1.

The yoke 2 of the electromagnetic actuator 10 is fixed to a clutch case 41 with bolts 42, the armature 3 is held by a guide 11, and they are arranged so that a force which presses a clutch pack 13 through a pressure plate 12 may act. The clutch pack 13 is arranged between a clutch guide 14 connected to an input shaft 21 and a clutch hub 16 connected to an output shaft 22. The clutch pack 13 controls engagement and disengagement of the clutch guide 14 and clutch hub 16, i.e., the input shaft 21 and output shaft 22 in a rotary direction.

The input shaft 21 is held by an input shaft ball bearing 31 in the clutch case 41, and protrudes to the exterior through an oil seal 33. The clutch hub 16 is held by a clutch hub clamp 15 and a clutch hub ball bearing 32, and the output shaft 22 is held by another device not shown. Electric power supply to the electromagnetic coil 1 and switching electromagnet coil 6 is performed by a clutch controller which is not shown.

Operation of a clutch with the above-mentioned construction will be explained below.

When the electromagnetic coil 1 and switching electromagnet coil 6 are not energized and the electromagnetic actuator is not activated, no force acts on the clutch pack 13, which is in a disengaged state that transmitting torque is zero, and the input shaft 21 and output shaft 22 are in the state of being able to freely rotate mutually.

Here, when a current is flowed through the electromagnetic coil 1, a magnetic field according to a current value is generated. Hence, since an attractive force is generated between the yoke 2 and armature 3, it is possible to give a force to the clutch pack 13. Since the clutch pack 13 generates transmitting torque proportional to pressure, it is possible to control the transmitting torque from the input shaft 21 to the output shaft 22 by controlling the current flowed through the electromagnetic coil 1. For example, by smooth adjustment of the transmitting torque, it is possible to gently perform revolution speed matching of the input shaft 21 and output shaft 22 with a rotation difference without variance of a rapid revolution speed.

When maintaining an engaging state of the clutch, the switching electromagnet coil 6 is energized after making the clutch into an engaging state with the electromagnetic coil 1 as mentioned above. After the current which flows in the switching electromagnet coil 6 fully rises, energization of the electromagnetic coil 1 is stopped. On this occasion, the switching electromagnet coil 6 can use a magnetomotive force of the permanent magnet 4 to be able to hold a force required for clutch engagement with little power consumption.

As described above, according to this embodiment, it is possible to reduce power consumption at the time of holding the clutch in an engaging state while securing a continuously adjusting function of transmission torque of a clutch device. Hence, it is possible to improve fuel consumption of an automobile using this for a power train.

### [Embodiment 4]

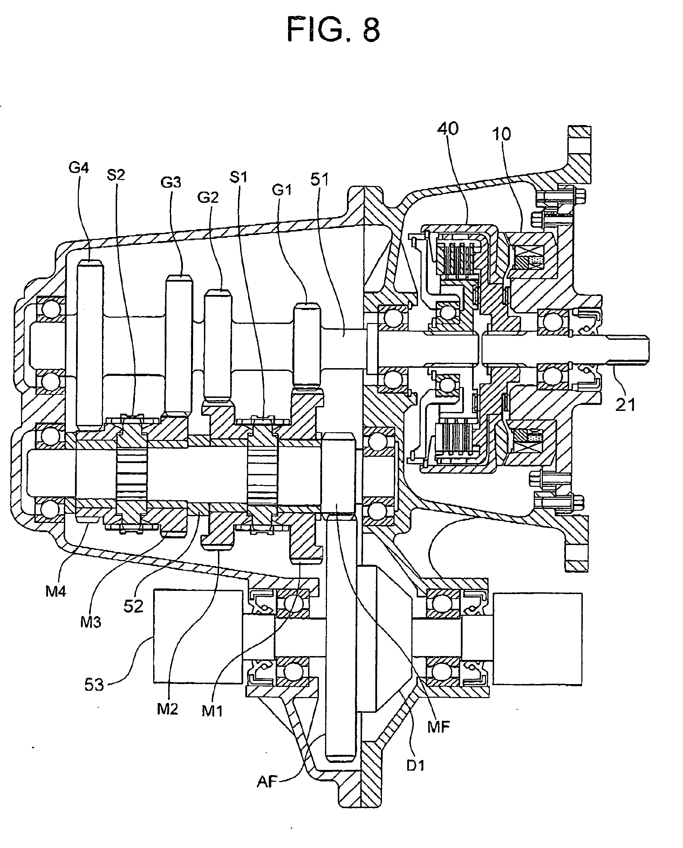

An embodiment of a transmission according to the present invention will be described with using Fig. 8.

Fig. 8 is a drawing showing a cross-section of an embodiment of a transmission for a mobile having a clutch using the electromagnetic actuator 10 according to the present invention. The construction of the electromagnetic actuator 10 and clutch device is the same as that in the third embodiment shown in Fig. 7.

A transmission is a device for a speed change of rotation of an engine of an automobile to transmit it to tires, and converting engine power into revolution speed suitable to a driving state. The input shaft 21 is connected to the engine and the output shaft 53 of the transmission is connected to tires. The transmission is installed in an engine room and is operated by electronic control equipment and an operation actuator which are not shown. Shift operation of the transmission is automatically executed by an order of electronic control equipment according to an operator's intention or driving state.

The transmission has a first shaft 51, a second shaft 52, and an output shaft 53, and gears (G1, G2, G3, and G4 and M1, M2, M3, and M4) from whose sizes are different are arranged between the first shaft 51 and second shaft 52. Respective gears correspond to respective transmission levels, and this embodiment is a four-speed transmission having four sets of gears. However, a back gear for backing an automobile is not shown in this embodiment. In addition, the number of gears may be 4 or more.

Respective gears are not fixed to a shaft on the second shaft 52, and are supported rotatably. Two synchromesh devices which couple each gear and the second shaft 52 are provided on the second shaft 53. The first synchro-mesh mechanism S1 has a role of synchronizing and coupling the second shaft gear M1 which is for the first speed, or the second shaft gear M2 which is for the second speed, with the second shaft 52. Similarly, the second synchro-mesh mechanism S2 has a role of synchronizing and coupling the second shaft gear M3 which is for the third speed, or the second shaft gear M4 which is for the fourth speed, with the second shaft 53. That is, by operating the two synchro-mesh mechanisms, a gear used among from gears which are in an idle condition on the second shaft 52 is selected, and is coupled to the second shaft 52 to obtain a state of transmitting power by a desired gear.

Rotation of the second shaft 52 is further transmitted to a third shaft by final gear MF and a ring gear AF. The rotation transmitted to the ring gear is transmitted to right and left tires, which are not shown, through a differential gear Dl which adjusts a rotational difference between the right and left tires of an automobile.

Here, the electromagnetic actuator 10 generates a control force of a clutch assembly 40, and operates this. The input shaft 21 and first shaft 51 are coupled in the clutch assembly. They are constructed so that the input shaft 21 and first shaft 51 may be separated when the clutch is a disengaged state, but the input shaft 21 and first shaft 51 may be coupled and may become the same rotation when the clutch is in an engaging state.

Operation of the transmission with the above-mentioned construction will be explained below.

It is assumed that it is a case of being going to drive an automobile from a stop state, and that an engine has been started and has been kept at moderate rotation. All synchromesh devices are in a neutral position, and no gear is coupled with the second shaft 52. Since the electromagnetic actuator 10 is not energized, the clutch is in a disengaged state.

First, the first synchromesh device S1 is operated by the operation actuator which is not shown, and the second shaft gear M1 for the first speed is coupled with the second shaft 52. Next, with keeping rotation of the engine, the electromagnetic coil 1 of the electromagnetic actuator 10 is energized, and the control force of the clutch is generated gradually. As the control force which the electromagnetic actuator 10 generates increases, the clutch transmits torque from the input shaft 21 to the first shaft 51. The torque is transmitted from the first shaft gear G1 for the first speed to the second shaft gear M2 for the first speed, further, it is transmitted from the second shaft 52 to the output shaft 53 through the final gear MF, ring gear AF, and differential gear D1, and it is transmitted to the tires which are not shown. The torque transmitted to the tires becomes a driving force which makes an automobile driven and automobile speed also rises gradually. After automobile speed fully rises, a current to the electromagnetic coil 1 is fully increased to increase the control force, and the clutch is fully engaged. In this state, the torque which the engine generates is transmitted to the tires without slip, and the automobile becomes in the driving state in the first speed.

Here, in order to make the automobile driven as it is, it is necessary to make the control force of the electromagnetic actuator 10 generated succeedingly, and to make the clutch engaged. In this case, the electromagnetic actuator 10 consumes electric power continuously, and since that electric power is obtained by rotating a generator under engine power from the first, it becomes loss to worsen fuel consumption of the automobile. Then, the switching electromagnet coil 6 of the electromagnetic actuator 10 is energized, and switching is performed so that the control force by the permanent magnet 4 in the electromagnetic actuator 10 may be generated. After the switching, a current which is flowed in the electromagnetic coil 1 is stopped.

Since the switching electromagnet coil 6 can accept slower response in comparison with the electromagnetic coil 1, it is made by a thin copper wire being wound many turns so as to operate under power saving. Thus, when maintaining the clutch in the engaging state, it is necessary not to worsen the fuel consumption of an automobile by saving electric power by energizing the switching electromagnet coil 6 to make the control force maintained by the attractive force which the permanent magnet 4 generates. Furthermore, for further power saving, it is also possible to take a form of corresponding only while an engine output is small by making the control force generated in a state that the switching electromagnet coil 6 is energized be a value smaller than a force required for operation of the clutch, and of corresponding at the engine output being increased by further energizing the electromagnetic coil 1 to increase the control force.

A case that running speed increases for gears to be changed from the first speed to the second speed will be explained below.

First, after the electromagnetic coil 1 is energized and a current fully rises, the current which is energizing the switching electromagnet coil 6 is stopped. Next, the current of the electromagnetic coil 1 is lowered with adjusting the torque which the engine generates, and the clutch is made disengaged so that a shock may not be generated.

After the disengagement of the clutch, the first synchro-mesh mechanism S1 is operated by an operation actuator, which is not shown, for the second shaft gear M1 for the first speed to be decoupled from the second shaft 52, and subsequently, the second shaft gear M2 for the second speed is coupled with the second shaft 52. Pressure of the clutch is generated gradually by energizing the electromagnetic coil 1 of the electromagnetic actuator 10 to couple the input shaft 21 with the first shaft 51.

After the transmitting torque of the clutch fully rises, the switching electromagnet coil 6 of the electromagnetic actuator 10 is energized, and switching is performed so that the control force by the permanent magnet 4 in the electromagnetic actuator 10 may be generated. After the switching, a current which is flowed in the electromagnetic coil 1 is stopped.

Thus, a speed change to the second speed can be performed and it is possible in a driving state in the second speed to maintain the driving state only with small electric power required for the switching electromagnet coil 6.

Hereafter, a speed change to the third speed and fourth speed, and a reverse speed change, for example, from the fourth speed to the third speed, can be also executed in the similar procedure, and it is possible to maintain a driving state with small electric power required for the switching electromagnet coil 6 in the driving state.

As described above, according to this embodiment, in the transmission of an automobile, it is possible to improve the fuel consumption of the automobile since it is possible to adjust transmitting torque continuously from disengagement to engagement with suppressing electric power which the electromagnetic actuator 10 consumes in the running state of engaging a clutch continuously.

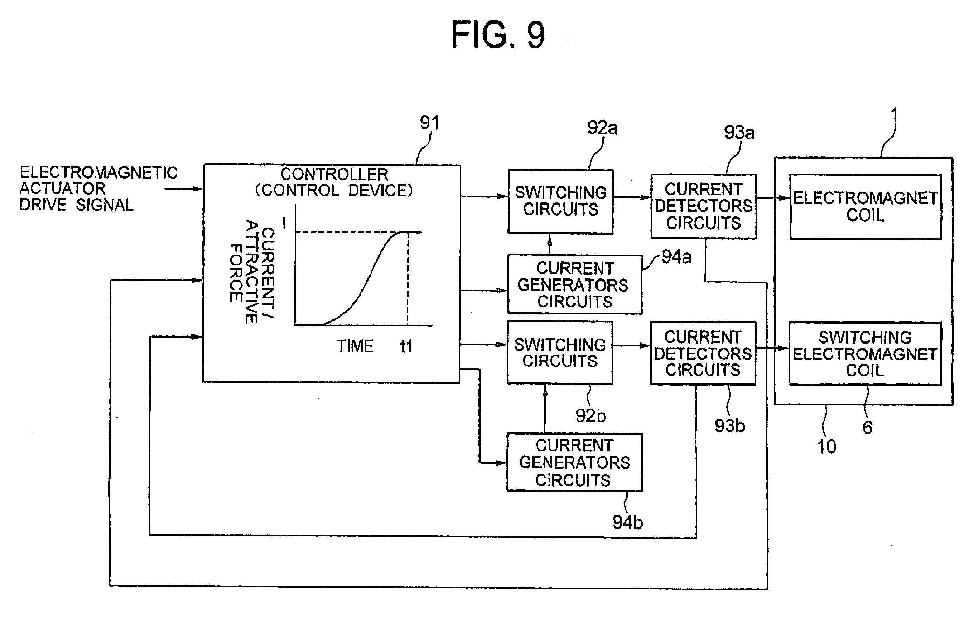

One embodiment of a control device which controls energization of the electromagnetic coil 1 and switching electromagnet coil 6 will be explained using Fig. 9. The control device is not limited to the construction of this embodiment since what is necessary is just what controls energization of the electromagnetic coil 1 and switching electromagnet coil 6 as mentioned above.

The control device of this embodiment is constructed of a controller 91, a current generator 94a which supplies a current to the electromagnetic coil 1, a switching circuit 92a which turns on and off energization from the current generator 94a, a current detector 93a which detects amplitude of the current which flows in the electromagnetic coil 1, a current generator 94b which supplies a current to the switching electromagnet coil 6, a switching circuit 92b which turns on and off energization from the current generator 94b, a current detector 93b which detects amplitude of the current which flows in the switching electromagnet coil 6, and the like.

For example, when an order (drive signal) on the basis of an operator's operation is inputted into the controller 91, the controller 91 command the current generator 94a a current value which changes with time so that a desired attractive force may be obtained, while turning on the switching circuit 92a. At this time, for example, in an auto clutch, the electromagnetic actuator 10 is driven by the order from an electronic controller which controls the clutch. This electronic controller may be also a controller 91, or may be also a controller different from the controller 91. The current generator 94a generates a current having a pattern which is commanded, and supplies it to the electromagnetic coil 1. At this time, it is recommendable to judge by the controller 91 whether the armature 3 is made attracted and moved by the electromagnetic coil 1 to the yoke 2 by detecting a current value, supplied to the electromagnetic coil 1, by the current detector 93a, or the like.

When or before it is detected that the armature 3 is made attracted and moved to the yoke 2, the energization of the switching electromagnet coil 6 is started. As for this energization, the switching circuit 92b is turned on with the order from the controller 91, and a current is supplied to the switching electromagnet coil 6 from the current generator 94b. In this embodiment, a power supply which always generates a predetermined voltage as a current generator 94b is used and the switching circuit 92b turns on and off the energization from this power supply. But, it is also good to control the current generator 94b so that the current supplied to the switching electromagnet coil 6 changes from the current generator 94b in a desired pattern. When it is detected that the armature 3 is made attracted and moved to the yoke 2 (for example, the current reaches a predetermined current value I in Fig. 9), and further, the controller 91 judges on the basis of the current value, detected in the current detector 93b, that the current which flows in the switching electromagnet coil 6 fully rises, the controller 91 issues an order to the switching circuit 92a and turns off the switching circuit 92a so as to stop the energization of the electromagnetic coil 1.

After the energization of the electromagnetic coil 1 is stopped, the state that the armature 3 is attracted to the yoke 2 side with the smaller current in comparison with the electromagnetic coil 1 is held by making the switching electromagnet coil 6 attract the armature 3 using the magnetomotive force of the permanent magnet 4. That is, the state that the armature 3 is attracted to the yoke 2 side, magnetic flux from the switching electromagnet coil 6 and magnetic flux from the permanent magnet 4 are generated in the same direction to the armature 3.

It should be further understood by those skilled in the art that although the foregoing description has been made on embodiments of the invention, the invention is not limited thereto and various changes and modifications may be made without departing from the scope of the appended claims. The above features and embodiments can be combined in any way, partly or as a whole.

## Claims

1. An electromagnetic actuator comprising a magnet coil (1), a yoke (2) which transmits magnetic flux generated by energizing the magnet coil (1), an armature (3) which is installed at a predetermined gap with the yoke (2), transmits the magnetic flux which is emitted from the yoke (2), and is attracted toward the yoke (2), and a permanent magnet (4), wherein there is provided a switching electromagnet coil (6) controllable so as for magnetic flux from the permanent magnet (4) which passes along a magnetic path short-circuited by the yoke side at the time of no-energization to pass along a magnetic path, which goes through the armature (3), by energizing **characterized in that** the switching electromagnet coil (6) applies a current in a direction of generating a magnetic field reverse to a direction of a magnetic field by the permanent magnet (4) at the time of no-energization, such that when the current applied by said switching electromagnet coil (6) becomes large, both the magnetic fields of the permanent magnet (4) and switching electromagnet coil (6) become counterclockwise to reinforce each other in an energized state.

2. The electromagnetic actuator according to claim 1, **characterized in that** a short-circuit magnetic circuit (5) which is installed so that magnetic flux which the permanent magnet (4) generates may return to the permanent magnet (4) without passing along the armature (3) after passing along a part or all of the yoke (2), wherein the electromagnetic actuator is constructed so that magnetic flux which the permanent magnet (4) generates may not generate a force of attracting the armature (3) by returning to the permanent magnet (4) through the short-circuit magnetic circuit (5), when the switching electromagnet coil (6) is not energized, and the magnetic flux to generate a Force of attracting the armature (3) by returning to the permanent magnet through the armature (3) without passing along the short-circuit magnetic circuit (5), when the switching electromagnet coil (6) is energized.

3. The electromagnetic actuator according to Claim 1 or 2, **characterized in that** a hollow-cylindrical permanent (4) magnet which is magnetized in a axial direction as the permanent magnet (4) is arranged in the yoke (2), one pole of the permanent magnet (4) contacts the yoke (2), another pole of the permanent magnet (4) contacts the short-circuit magnetic circuit (5), other portions of the short-circuit magnetic circuit (5) contact the yoke (2), and the switching electromagnet coil (6) is arranged in a region surrounded by the permanent magnet (4), the yoke (2), and the short-circuit magnetic circuit (5).

4. The electromagnetic actuator according to at least one of claims 1 to 3, **characterized in that** a discal permanent magnet (4) which is magnetized in a radial direction as the permanent magnet (4) is arranged in the yoke (2), both poles of the permanent magnet (4) are made to contact the yoke (2), and the switching electromagnet coil (6) is arranged in a region surrounded by the permanent magnet (4) and the yoke (2).

5. A clutch device, being activated by the electromagnetic actuator according to at least one of claims 1-4.

6. A power transmission device for an automobile, having a clutch device which is activated by the electromagnetic actuator according to at least one of claims 1-4.

## Patentansprüche

1. Elektromagnetischer Aktuator mit einer Magnetspule (1), einem Joch (2), das einen Magnetfluss überträgt, der durch Zuführen von Energie zur Magnetspule (1) erzeugt wird, einem Anker (3), der an einem vorgegebenen Spalt mit dem Joch (2) eingebaut ist, den Magnetfluss, der von dem Joch (2) emittiert wird, überträgt und in Richtung des Jochs (2) angezogen wird, und einem Dauermagneten (4), wobei eine elektromagnetische Schaltspule (6) vorgesehen ist, die dazu steuerbar ist, dass ein Magnetfluss von dem Dauermagneten (4), der entlang eines Magnetwegs fließt, der von der Jochseite zu der Zeit einer Nicht-Energiezuführung kurzgeschlossen wird, durch Energiezuführung einen Magnetweg, der durch den Anker (3) hindurchgeht, entlang fließt, **dadurch gekennzeichnet, dass** die elektromagnetische Schaltspule (6) einen Strom in einer Richtung des Erzeugens eines Magnetfelds, das umgekehrt zu einer Richtung eines Magnetfelds ist, durch den Dauermagneten (4) zu der Zeit der Nicht-Energiezuführung anlegt, so dass, wenn der von der elektromagnetischen Schaltspule (6) angelegte Strom groß wird, beide Magnetfelder des Dauermagneten (4) und der elektromagnetischen Schaltspule (6) gegen den Uhrzeigersinn gerichtet werden, um einander in einem Energie führenden Zustand zu verstärken.

2. Elektromagnetischer Aktuator nach Anspruch 1, **dadurch gekennzeichnet, dass** eine Kurzschluss-Magnetschaltung (5), die so eingebaut ist, dass der Magnetfluss, den der Dauermagnet (4) erzeugt, zu dem Dauermagneten (4) zurückkehren kann, ohne entlang des Ankers (3) zu fließen, nachdem er einen Teil des Jochs oder das gesamte Joch (2) entlang geflossen ist, wobei der elektromagnetische Aktuator so aufgebaut ist, dass der Magnetfluss, den der Dauermagnet (4) erzeugt, keine Kraft zum Anziehen des Ankers (3) erzeugen kann, indem er zu dem Dauermagneten (4) durch die Kurzschluss-Magnetschaltung (5) zurückkehrt, wenn der elektromagnetischen Schaltspule (6) keine Energie zugeführt wird, und der Magnetfluss eine Kraft zum Anziehen des Ankers (3) erzeugt, indem er zu dem Dauermagneten durch den Anker (3) zurückkehrt, ohne entlang der Kurzschluss-Magnetschaltung (5) zu fließen, wenn der elektromagnetischen Schaltspule (6) Energie zugeführt wird.

3. Elektromagnetischer Aktuator nach Anspruch 1 oder 2, **dadurch gekennzeichnet, dass** ein hohlzylindrischer Dauermagnet (4), der in axialer Richtung magnetisiert wird, wenn der Dauermagnet (4) in dem Joch (2) angeordnet wird, ein Pol des Dauermagneten (4) das Joch (2) berührt, ein weiterer Pol des Dauermagneten die Kurzschluss-Magnetschaltung (5) berührt, weitere Abschnitte der Kurzschluss-Magnetschaltung (5) das Joch berühren (2) und die elektromagnetische Schaltspule (6) in einem Bereich angeordnet ist, der von dem Dauermagneten (4), dem Joch (2) und der Kurzschluss-Magnetschaltung (5) umgeben ist.

4. Elektromagnetischer Aktuator nach zumindest einem der Ansprüche 1 bis 3, **dadurch gekennzeichnet, dass** ein distaler Dauermagnet (4), der in radialer Richtung magnetisiert wird, wenn der Dauermagnet (4) in dem Joch (2) angeordnet wird, beide Pole des Dauermagneten (4) zum Berühren des Jochs (2) gebracht werden und die elektromagnetische Schaltspule (6) in einem Bereich angeordnet ist, der von dem Dauermagneten (4) und dem Joch (2) umgeben ist.

5. Kupplungsvorrichtung, die von dem elektromagnetischen Aktuator nach zumindest einem der Ansprüche 1 bis 4 aktiviert wird.

6. Getriebevorrichtung für ein Fahrzeug, mit einer Kupplungsvorrichtung, die von dem elektromagnetischen Aktuator nach zumindest einem der Ansprüche 1 bis 4 aktiviert wird.

## Revendications

1. Actionneur électromagnétique comportant une bobine d'électro-aimant (1), une culasse (2) laquelle transmet un flux magnétique généré en excitant la bobine d'électro-aimant (1), un induit (3) lequel est installé à un intervalle prédéterminé avec la culasse (2), transmet le flux magnétique qui est émis par la culasse (2), et est attiré vers la culasse (2), et un aimant permanent (4), dans lequel une bobine d'électro-aimant de commutation (6) est agencée laquelle peut être commandée de sorte qu'un flux magnétique émanant de l'aimant permanent (4) qui passe le long d'un trajet magnétique court-circuité par le côté de culasse au moment de la non excitation passe le long d'un trajet magnétique, lequel traverse l'induit (3), par excitation **caractérisé en ce que** la bobine d'électro-aimant de commutation (6) applique un courant dans une direction de génération d'un champ magnétique inverse à une direction d'un champ magnétique par l'intermédiaire de l'aimant permanent (4) au moment de la non excitation, de sorte que quand le courant appliqué par ladite bobine d'électro-aimant de commutation (6) devient important, à la fois les champs magnétiques de l'aimant permanent (4) et de la bobine d'électroaimant de commutation (6) passent dans le sens inverse des aiguilles d'une montre pour se renforcer mutuellement dans un état excité.

2. Actionneur électromagnétique selon la revendication 1, **caractérisé en ce que** un circuit magnétique de court-circuit (5) qui est installé de sorte qu'un flux magnétique que l'aimant permanent (4) génère peut retourner dans l'aimant permanent (4) sans passer le long de l'induit (3) après être passé le long d'une partie ou de la totalité de la culasse (2), dans lequel l'actionneur électromagnétique est construit de sorte qu'un flux magnétique que l'aimant permanent (4) génère peut ne pas générer de force pour attirer l'induit (3) en retournant dans l'aimant permanent (4) via le circuit magnétique de court-circuit (5), lorsque la bobine d'électro-aimant de commutation (6) n'est pas excitée, et le flux magnétique pour générer une force pour attirer l'induit (3) en retournant dans l'aimant permanent via l'induit (3) sans passer le long du circuit magnétique de court-circuit (5), lorsque la bobine d'électro-aimant de commutation (6) est excitée.

3. Actionneur électromagnétique selon la revendication 1 ou 2, **caractérisé en ce que** un aimant permanent cylindrique creux (4) lequel est aimanté dans une direction axiale en tant qu'aimant permanent (4) est agencé dans la culasse (2), un pôle de l'aimant permanent (4) est en contact avec la culasse (2), un autre pôle de l'aimant permanent (4) et en contact avec le circuit magnétique de court-circuit (5), d'autres parties du circuit magnétique de court-circuit (5) sont en contact avec la culasse (2), et la bobine d'électro-aimant de commutation (6) est agencée dans une région entourée par l'aimant permanent (4), la culasse (2), et le circuit magnétique de court-circuit (5).

4. Actionneur électromagnétique selon au moins l'une des revendications 1 à 3, **caractérisé en ce que** un aimant permanent discal (4) lequel est aimanté dans une direction radiale en tant qu'aimant permanent (4) est agencé dans la culasse (2), les deux pôles de l'aimant permanent (4) sont amenés au contact de la culasse (2), et la bobine d'électro-aimant de commutation (6) est agencée dans une région entourée par l'aimant permanent (4) et la culasse (2).

5. Dispositif d'embrayage, étant activé par l'actionneur électromagnétique selon au moins l'une des revendications 1 à 4.

6. Dispositif de transmission de puissance pour une automobile, ayant un dispositif d'embrayage lequel est activé par l'actionneur électromagnétique selon au moins l'une des revendications 1 à 4.
